# EUROPÄISCHE PATENTSCHRIFT

(11) **EP 1 526 018 B1**
(45) Veröffentlichungstag und Bekanntmachung des Hinweises auf die Patenterteilung: **20.12.2006**
(21) Anmeldenummer: 03292625.5
(22) Anmeldetag: 21.10.2003
(51) Int. Cl.: B60H 1/22

(54) **Heizkörper mit integrierter elektrischer Zusatzheizung**
Heater with integrated electric supplementary heating
Dispositif de chauffage avec chauffage électrique supplémentaire integré

(43) Veröffentlichungstag der Anmeldung: 27.04.2005
(73) Patentinhaber: Behr France Rouffach SAS, 68250 Rouffach (FR)
(72) Erfinder: Brun, Michel, 68740 Rustenhart (FR); Miss, Pascal, 67600 Sélestat (FR); Mougey, Mathieu, 68190 Ensisheim (FR); Mundel, Maxime, 68250 Pfaffenheim (FR); Papi, Yannick, 68740 Munchhouse (FR); Schmittheisler, Christophe, 67680 Epfig (FR)
(74) Vertreter: Grauel, Andreas

(56) Entgegenhaltungen:
- WO-A-02/34555
- DE-A- 10 049 030
- FR-A- 2 801 468
- US-A- 6 055 360

## Beschreibung

Die Erfindung betrifft einen Heizkörper einer Heizungs- oder Klimaanlage für Kraftfahrzeuge mit integrierter elektrischer Zusatzheizung nach der älteren europäischen Patentanmeldung Nr. 03290620.8 der Anmelderin.

In der älteren europäischen Patentanmeldung Nr. 03290620.8 ist ein Heizkörper mit einer elektrischen Zusatzheizung beschrieben, bei welcher die Heizelemente auf einer Stirnfläche des Heizkörpers angeordnet und durch ein elektrisch leitendes Gitter am Netz befestigt sind. Die Stromzufuhr zur Beheizung der Heizelemente erfolgt durch elektrische Leiter in Form von Kontaktblechen, die in einen Steckerkasten führen, der am Wasserkasten des Heizkörpers befestigt ist. Vorzugsweise ist dieser Steckerkasten derart mit dem Heizkörper integriert, dass er auf einem am Wasserkasten angespritzten Flansch befestigt ist. Hieraus könnte der Nachteil erwachsen, dass der entsprechend angepasste Wasserkasten nur für Heizkörper mit Zusatzheizung verwendet werden kann. Für Heizkörper ohne Zusatzheizung wäre ein anderer Wasserkasten, d. h. ohne integrierten Flansch notwendig.

In der US 6,055,360 wird eine Kombination aus Kühlmittelheizkörper und elektrischem Zuheizer beschrieben. Die Verteilung des über Kabel zugeführten elektrischen Stroms erfolgt in einem Gehäuse, welches auf eines der Sammelrohre aufgesteckt werden kann.

Es ist Aufgabe der vorliegenden Erfindung, die erwähnten konstruktiven Einschränkungen zu vermeiden und einen Heizkörper der eingangs genannten Art derart zu gestalten, dass die Befestigung des Steckerkastens weitestgehend unabhängig vom Heizkörper ist.

Diese Aufgabe wird durch die Merkmale des Patentanspruches 1 gelöst. Erfindungsgemäß ist der Steckerkasten auf einem separaten Deckel befestigt, der elektrisch mit der Zusatzheizung und mechanisch mit dem Wasserkasten verbunden werden kann. Dabei wird der Deckel einerseits am Heizkörper und andererseits am Gehäuse der Heizungs- oder Klimaanlage fixiert. Daraus ergibt sich der Vorteil, dass der Steckerkasten bzw. der Stromanschluss unabhängig vom Heizkörper herstellbar und verwendbar ist. Der Heizkörper kann daher mit oder ohne Zusatzheizung verbaut werden. Im Falle einer Zusatzheizung ist diese bereits am fertigen Heizkörper vorhanden, und der separate Deckel mit dem Steckerkasten wird nachträglich zu einer Baueinheit komplettiert, die dann in die Heizungs- oder Klimaanlage eingesetzt wird. Es ist somit auch möglich und damit von Vorteil, Heizkörper mit unterschiedlichen elektrischen Zusatzheizungen zu verwenden, bei welchen lediglich die elektrischen Leiter an den separaten Decke mit Steckerkasten angepasst sein müssen.

Vorteilhafterweise erfolgt die Fixierung des Deckels einerseits am Heizkörper und andererseits am Gehäuse der Heizungs- oder Klimaanlage durch eine Feder-Nut-Verbindung. Die Nuten sind dabei im Deckel angeordnet, während am Wasserkasten und am Gehäuse entsprechende Rippen angespritzt sind, die in die Nuten eingreifen und gleichzeitig eine Abdichtung bewirken.

Nach einer weiteren vorteilhaften Ausgestaltung der Erfindung wird der Deckel durch eine Clipsverbindung am Wasserkasten befestigt, d. h. nach Herstellung der Feder-Nut-Verbindung fixiert. Damit wird der Vorteil erreicht, dass Heizkörper, Zusatzheizung und Deckel mit Steckerkasten eine Baueinheit bilden, die als solche montiert, d. h. in eine entsprechende Öffnung im Gehäuse der Heizungs- oder Klimaanlage eingesetzt werden kann.

In weiterer vorteilhafter Ausgestaltung der Erfindung sind an der Unterseite des Deckels, also der dem Steckerkasten abgewandten Seite nach unten abragende Clipse vorgesehen, die derart ausgebildet sind, dass sie die elektrischen Leiter bzw. Kontaktbleche der Zusatzheizung durch eine Steckbewegung erfassen und kontaktieren können. Damit wird der Vorteil einer einfachen elektrischen Verbindung und Montage von Deckel und Heizkörper erreicht. Vorteilhafterweise sind dabei die Leiter der Zusatzheizung als L-förmige Kontaktbleche ausgebildet, welche leicht von den Clipsen umfasst werden können.

Nach einer weiteren vorteilhaften Ausgestaltung der Erfindung ist die Zusatzheizung als so genannte Gitterheizung nach der älteren Patentanmeldung der Anmelderin ausgebildet, d. h. die zugehörigen Heizelemente sind auf einer Stirnfläche des Heizkörpers angeordnet. Damit ergeben sich für diese Art der Zusatzheizung in Verbindung mit dem erfindungsgemäßen separaten Deckel weitere Einsatzmöglichkeiten.

Ein Ausführungsbeispiel der Erfindung ist in der Zeichnung dargestellt und wird im Folgenden näher beschrieben. Es zeigen
- Fig. 1: einen Ausschnitt eines Heizkörpers mit Zusatzheizung und Steckerkasten
- Fig. 2: den Heizkörper gemäß Fig. 1 in einer Ansicht von der Seite,
- Fig. 3: den Heizkörper gemäß Fig. 1 in einer Ansicht von oben,
- Fig. 4: den Heizkörper gemäß Fig. 1 in einer perspektivischen Ansicht In einem Heizungsgehäuse,
- Fig. 5: einen Ausschnitt in einem Heizungsgehäuse für den Heizkörper,
- Fig. 6: einen Deckel zur Befestigung des Steckerkastens,
- Fig. 7: einen Schnitt durch den Deckel gemäß Linie VII-VII in Fig. 6 und
- Fig. 8: einen Schnitt durch den Deckel gemäß der Linie VIII-VIII in Fig. 6.

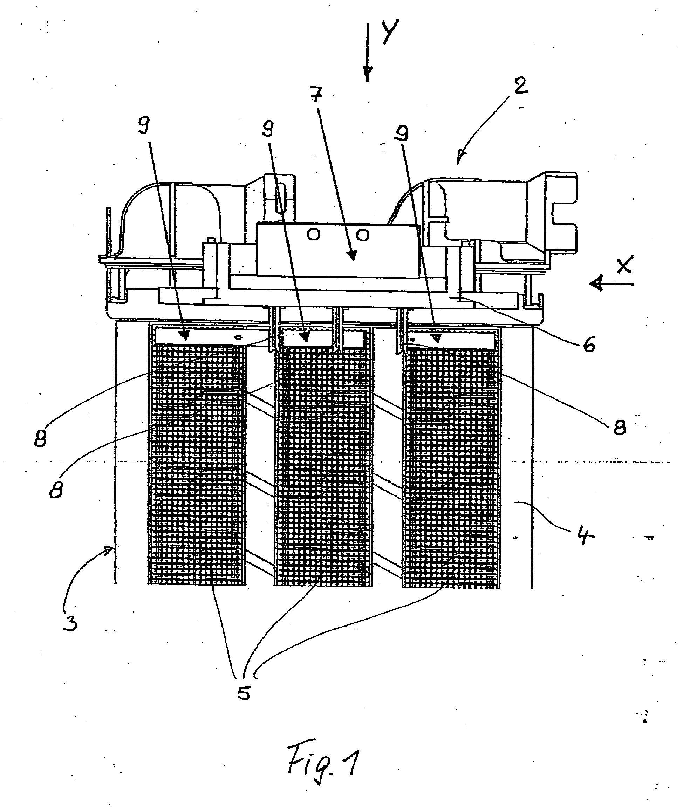

**Fig. 1** zeigt in einer Ansicht von vorn die obere Hälfte eines Heizkörpers 1, wie der in der älteren europäischen Anmeldung Nr. 03290620.8 der Anmelderin beschrieben ist. Der Heizkörper 1 ist also ein mechanisch gefügter Rundrohr-Heizkörper mit nicht dargestellten Rohrgabeln sein, die in einen Wasserkasten 2 münden. Die nicht dargestellten Rohrgabeln sind Teil eines Netzes 3, welches eine Stirnfläche 4 (hier die Luftaustrittsfläche des Heizkörpers 1) aufweist. An dieser Stirnfläche 4 ist ein dreiteiliges Gitter 5 angeordnet, welches eine elektrische Zusatzheizung, beispielsweise gemäß der älteren Anmeldung darstellt. Am Wasserkasten 2 ist ein Deckel 6 angeordnet, der einen Steckerkasten 7 trägt. Von der Unterseite des Deckels 6 ragen elastisch verformbare Zungenpaare 8 nach unten ab, welche elektrisch leitend mit Anschlussblechen 9 der Gitter 5 verbunden sind.

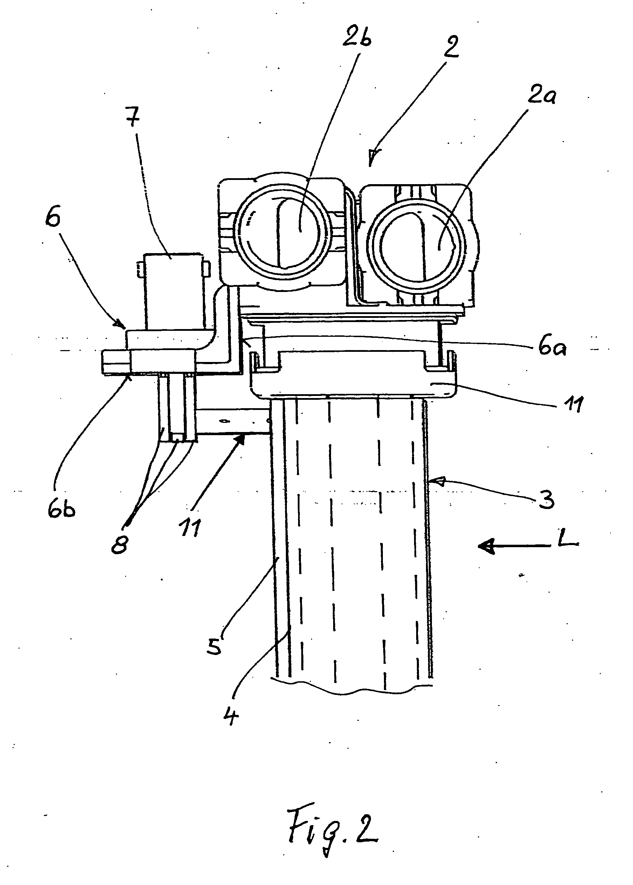

**Fig. 2** zeigt den Heizkörper 1 gemäß Fig. 1 in einer Seitenansicht, d. h. in Richtung des Pfeils X. Der Wasserkasten 2, der aus Kunststoff oder Aluminium hergestellt ist, weist eine Eintrittsöffnung 2a und eine Austrittsöffnung 2b für ein Kühlmittel auf, welches in einem nicht dargestellten Heizungs- bzw. Kühlkreislauf eines Kraftfahrzeuges zirkuliert. Das Netz bzw. der Heizkörperblock 3 weist gestrichelt eingezeichnete Rohre 10 auf, die Schenkel einer vollständig nicht sichtbaren Rohrgabel sind. Die freien Enden der Rohre 10 sind in einem Rohrboden 11 aufgenommen, der wiederum dicht mit dem Wasserkasten 2 verbunden ist. Diese Bauweise eines Wärmeübertragers wird als mechanisch gefügt bezeichnet. Andere Bauweisen, z. B. ein gelöteter Heizkörper mit Flachrohren und Wellrippen wäre ebenfalls möglich. Während das Kühlmittel den Heizkörper durch die Rohre 10 von oben nach unten und von unten nach oben durchströmt, durchströmt die Luft den Heizköperblock 3 in Richtung des Pfeils L. Auf der Rückseite, d. h. auf der Luftaustrittsseite des Heizkörperblockes 3 ist die Zusatzheizung 5 angeordnet, von welcher im oberen, d. h. dem Rohrboden 11 benachbarten Bereich L-förmig ausgebildete Kontaktbleche 11 abgehen, welche elektrisch leitend mit den Anschlussblechen 9 verbunden sind. Der Deckel 6, der wie der Wasserkasten 2 in Kunststoff oder Aluminium hergestellt ist, weist eine etwa L-förmige Gestaltung auf, und zwar mit einer in der Zeichnung senkrecht verlaufenden Anlagefläche 6a und einer in der Zeichnung etwa waagerecht verlaufenden unteren Anlagefläche 6b. Auf dem Deckel 6 ist - wie bereits erwähnt - der Steckerkasten 7 angeordnet, und von dessen unterer Anlagefläche 6b ragen drei elastische Zungen 8 nach unten ab, von denen zwei vor und eine hinter der Zeichenebene angeordnet sind und das L-förmige Kontaktblech 11 umfassen, d. h. mit diesem eine Clipsverbindung bilden. Damit ist eine elektrisch leitende Verbindung zwischen der Zusatzheizung 5 und den nicht dargestellten Kontakten des Steckerkastens 7 hergestellt.

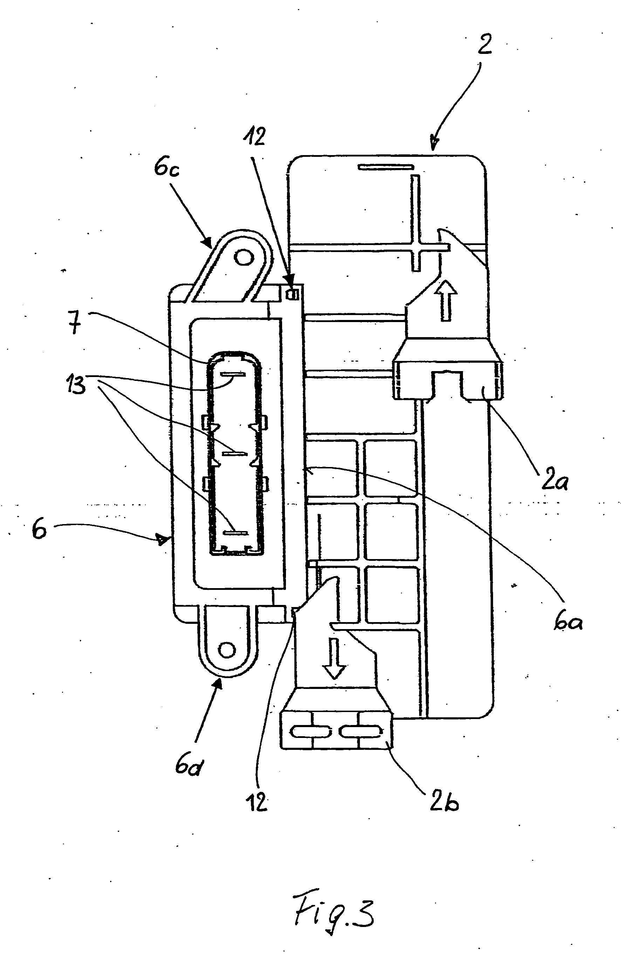

**Fig. 3** zeigt den Heizkörper 1 gemäß Fig. 1 in einer Draufsicht, d. h. in Richtung des Pfeils Y. In dieser Draufsicht weist der Deckel 6 einen etwa rechteckförmigen Querschnitt auf, an dessen Schmalseiten Befestigungsaugen 6c, 6d angeordnet sind. Der Deckel 6 liegt mit seiner Anlagefläche 6a am Wasserkasten 2 an und ist durch zwei Clipsverbindungen 12 an dem Wasserkasten 2 arretiert. Der Steckerkasten 7 weist drei Kontaktfahnen 13 auf, auf die ein nicht dargestellter Stecker eines Stromkabels aufgesteckt werden kann.

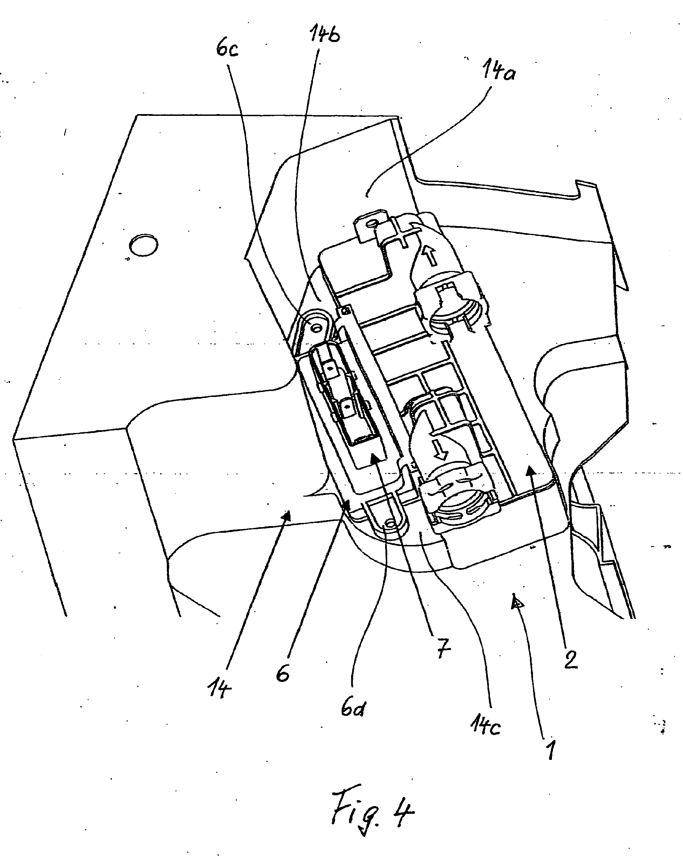

**Fig. 4** zeigt eine perspektivische Darstellung des Heizkörpers 1 mit Wasserkasten 2 und Deckel 6, eingesetzt in ein Gehäuse 14 einer vollständig nicht dargestellten Heizungs- oder Klimaanlage eines Kraftfahrzeuges. Die vormontierte Baueinheit, bestehend aus Heizkörper 1 mit Wasserkasten 2 und Deckel 6 mit Steckerkasten 7 wird in einen Schacht 14a des Heizungsgehäuses 14 eingesetzt, sodass sich der hier nicht sichtbare Heizkörperblock 3 in einem Luftführungskanal befindet und von Luft durchströmbar ist. Die Befestigungsaugen 6c, 6d des Deckels 6 liegen auf einer Konsole 14b, 14c des Gehäuses 14 auf und sind dort befestigt. In hier nicht sichtbarer ähnlicher Weise ist auch der Wasserkasten 2 am Gehäuse 14 befestigt.

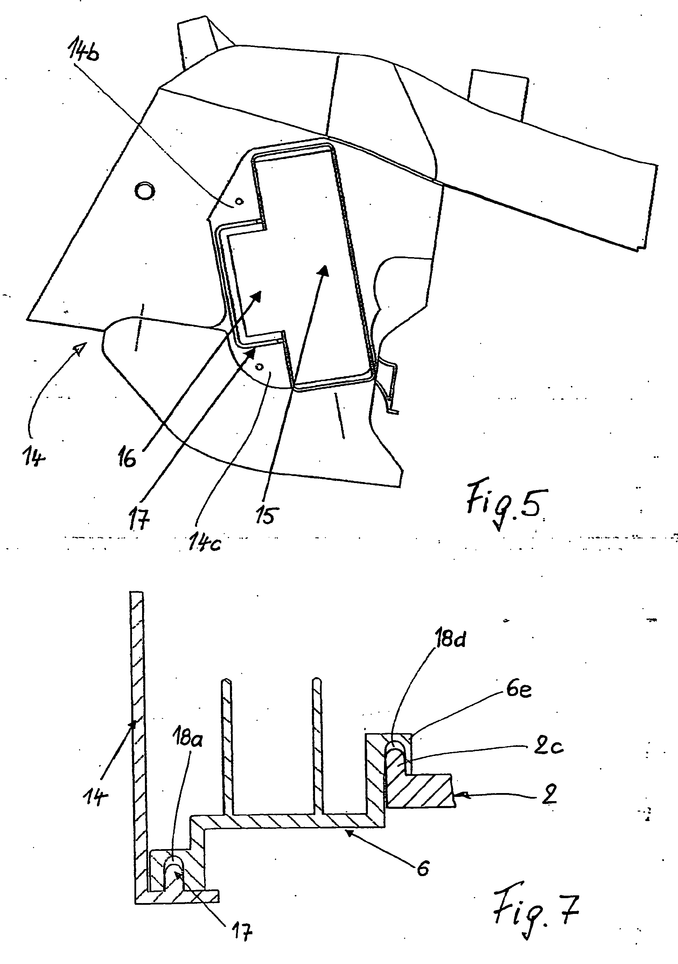

**Fig. 5** zeigt das Gehäuse 14 mit einem rechteckförmigen Ausschnitt 15 für den Heizkörper 1 und einem weiteren kleineren Ausschnitt 16 für den Deckel 6 (beide hier nicht dargestellt). Im Randbereich dieses kleineren Ausschnittes 16 ist eine etwa C-förmig ausgebildete Rippe 17, senkrecht aus der Zeichenebene hervorstehend, angeordnet, die zur Fixierung und Abdichtung des Deckels 6 dient, wie später erläutert wird. Ferner sind hier die Konsolen 14b, 14c zur Befestigung der Augen 6c, 6d erkennbar.

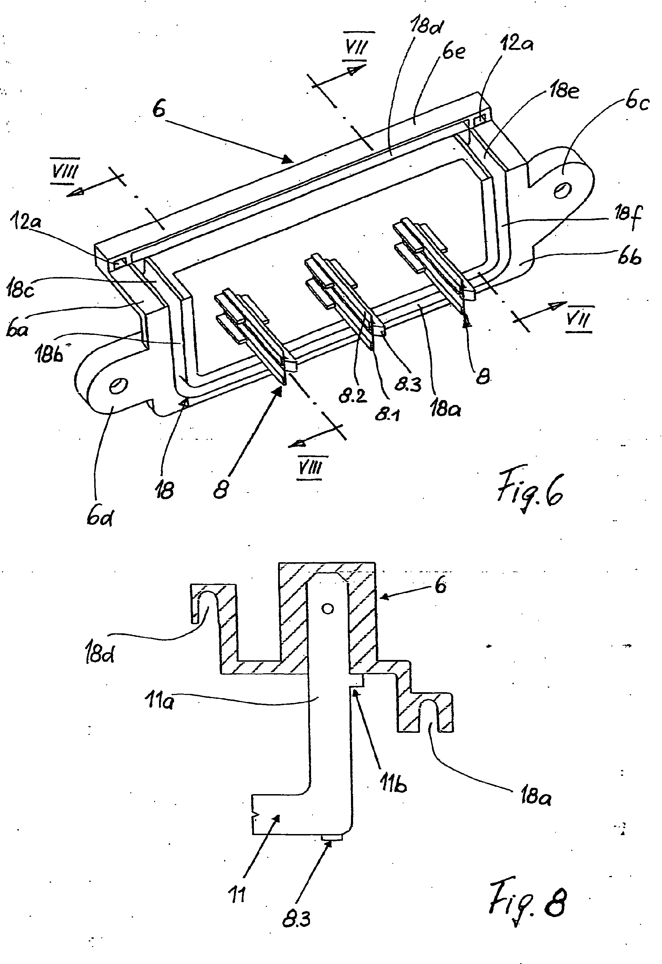

**Fig. 6** zeigt als Einzelteil den Deckel 6 mit seiner seitlichen Anlagefläche 6a und seiner unteren Anlagefläche 6b, welche miteinander etwa einen rechten Winkel bilden. Seitlich an den Schmalseiten der unteren Auflagefläche 6b sind die Befestigungsaugen 6c. 6d angeordnet. An den oberen Bereich der Anschlagfläche 6a ist eine weitere schmale Anschlagleiste 6e angeschossen, in deren äußeren Enden Öffnungen 12a für die Clipsverbindung 12 mit dem Wasserkasten 2 angeordnet sind. In der seitlichen Anschlagfläche 6a, der unteren Anschlagfläche 6b und der Anschlagleiste 6c ist eine umlaufende Nut 18, bestehend aus den einzeln miteinander in Verbindung stehenden Nutabschnitten 18a bis 18f angeordnet, welche für den Eingriff entsprechender Rippen am Gehäuse 14 bzw. am Wasserkasten 2 vorgesehen sind. Beispielsweise greift in die Nutabschnitte 18a, 18b, 18f, welche einen etwa C-förmigen Verlauf aufweisen, die Gehäuserippe bis 17 ein, nämlich dann, wenn der Heizkörper 1 mit dem Deckel 2 im Gehäuse 14 - wie in Fig. 4 dargestellt - montiert ist. Von der Unterseite 6b des Deckels 6 ragen drei Kontaktzungenpaare 8 senkrecht nach unten ab, wobei eine Kontaktzungenpaarung jeweils aus zwei äußeren, auf einer Seite liegenden Zungen 8.1, 8.2 und einer dritten gegenüber liegenden mittleren Zunge 8.3 besteht. Diese drei Zungen 8.1, 8.2, 8.3 umfassen jeweils das nicht dargestellt L-förmig ausgebildete Kontaktblech 11 (vgl. Fig. 2).

**Fig. 7** zeigt einen Schnitt entlang der Linie VII-VII in Fig. 6, d. h. durch den Deckel 6, wobei zusätzlich in dieser Darstellung Teile des Gehäuse14 und es Wasserkastens 2 dargestellt sind. Am Gehäuse 14 ist die Rippe 17 (vgl. Fig. 5) angespritzt, die in den Nutabschnitt 18a des Deckels 6 eingreift, diesen fixiert und abdichtet. In analoger Weise ist an dem Wasserkasten 2 (teilweise dargestellt) eine Rippe 2c angespritzt, welche in den Nutabschnitt 18d in der Anschlagleiste 6e eingreift, wodurch der Deckel 6 am Wasserkasten 2 fixiert und abgedichtet wird.

**Fig. 8** zeigt einen Schnitt längs der Linie VIII-VIII in Fig. 2, d. h. durch den Deckel 6 im Bereich der Kontaktzungen 8. Zusätzlich ist hier das L-förmig ausgebildete Kontaktblech 11 (vgl. Fig. 2), in der Zeichenebene liegend, teilweise dargestellt, welches mit einem oberen Ende eines Schenkels 11a bis in den Deckel 6 bzw. Steckerkasten 7 hineinreicht. Der in der Zeichnung senkrecht angeordnete Schenkel 11a weist einen Anschlag 11 b auf, welcher an der Unterseite des Deckels 6 anliegt. Das Kontaktblech 11 wird von einer hinteren, mittleren Kontaktzunge 8.3, die hinter der Zeichenebene liegt und verdeckt ist, umfasst, und auf seiner Vorderseite, d. h. vor der Zeichenebene liegend, von zwei weiteren, nicht dargestellten äußeren Kontaktzungen 8.1, 8.2.

Die Montage des Heizkörpers 1 mit Deckel 6 einschließlich Steckerkasten 7 läuft wie folgt ab: Zunächst wird der Heizkörper 1, bestehend aus Heizkörperblock 3, Rohrboden 11 und Wasserkasten 2 hergestellt. Danach wird die elektrische Zusatzheizung mit den Gittern 5 am Heizkörperblock 3 befestigt, einschließlich der L-förmigen Kontaktbleche 11. Dann wird der Deckel 6 mit Steckerkasten 7 einerseits am Wasserkasten 2 mechanisch befestigt und andererseits elektrisch leitend über die Kontaktzungenpaare 8 durch Verclipsung mit den L-förmigen Kontaktblechen 11 verbunden. Die mechanische Verbindung mit dem Wasserkasten wird durch die in den Nutabschnitt 18d eingreifende Rippe 2c des Wasserkastens 2 (vgl. Fig. 7) bewirkt, wobei gleichzeitig eine Fixierung durch die Verclipsung 12 mit dem Wasserkasten 2 erfolgt. Damit ist eine vormontierte Baueinheit geschaffen, die jetzt in die Ausschnitte 15, 16 des Heizungsgehäuses 14 (vgl. Fig. 5) eingesetzt werden kann. Dabei greift die Gehäuserippe 17 in die Nutabschnitte 18a, 18b, 18f des Deckels 6 ein und bildet damit eine Feder-Nut-Verbindung. Darüber hinaus erfolgt eine Befestigung des Deckels 6 über die Augen 6c, 6d an den Konsolen 14b, 14c. Damit ist der Heizkörper einschließlich Deckel und Stekkerkasten im Gehäuse 14 hinreichend befestigt und abgedichtet.

## Patentansprüche

1. Heizkörper einer Heizungs- oder Klimaanlage für Kraftfahrzeuge mit integrierter elektrischer Zusatzheizung, wobei der Heizkörper (1) einen Wasserkasten (2), ein aus Rohren und Rippen bestehendes Netz (3) mit einer Stirnfläche (4) aufweist, wobei die Zusatzheizung Heizelemente aufweist, die in wärmeleitender Verbindung mit den Rippen stehen, und über elektrische Leiter (11) mit einem am Wasserkasten (2) angeordneten Steckerkasten (7) für die Stromversorgung und die Beheizung der Heizelemente verbunden ist, und wobei der Steckerkasten (7) auf einem separatem Deckel (6) befestigt ist, der mechanisch mit dem Wasserkasten (2) und elektrisch mit den Leitern (11) verbindbar ist, wobei der Deckel (6) und der Heizkörper (1) in einem Gehäuse (14) der Heizungs- oder Klimaanlage montierbar sind, **dadurch gekennzeichnet dass** der Deckel (6) am Wasserkasten (2) des Heizkörpers (1) und am Gehäuse (14) fixierbar ist.

2. Heizkörper nach Anspruch 1, **dadurch gekennzeichnet, dass** der Deckel (6) über eine Feder-Nut-Verbindung (2c, 18d) am Wasserkasten (2) fixierbar ist.

3. Heizkörper nach Anspruch 1 oder 2, **dadurch gekennzeichnet, dass** der Deckel (6) über eine Feder-Nut-Verbindung (17, 18a) am Gehäuse (14) fixierbar und abdichtbar ist.

4. Heizkörper nach Anspruch 1, 2 oder 3, **dadurch gekennzeichnet, dass** der Deckel (6) zwei etwa senkrecht zueinander angeordnete Anlageflächen (6a, 6b) aufweist, in welchen eine umlaufende Nut (18), bestehend aus Nutabschnitten (18a bis 18f), für die Feder-Nut-Verbindungen angeordnet ist, und dass am Wasserkasten (2) und am Gehäuse (14) mit der Nut (18) korrespondierende Federn (17, 2c) angeordnet sind.

5. Heizkörper nach Anspruch 4, **dadurch gekennzeichnet, dass** die Federn als angespritzte Rippen (17, 2c) ausgebildet sind.

6. Heizkörper nach einem der Ansprüche 1 bis 5, **dadurch gekennzeichnet, dass** der Deckel (6) mittels einer Clipsverbindung (12) am Wasserkasten (2) arretierbar ist.

7. Heizkörper nach Anspruch 4, **dadurch gekennzeichnet, dass** von der am Gehäuse (14) fixierten Anlagefläche (6b) des Deckels (6) Clipse (8) abragen, welche mit den elektrischen Leitern (11) verclipsbar sind.

8. Heizkörper nach Anspruch 7, **dadurch gekennzeichnet, dass** die elektrischen Leiter als L-förmige Kontaktbleche (11) ausgebildet sind.

9. Heizkörper nach einem der Ansprüche 1 bis 8, **dadurch gekennzeichnet, dass** die Heizelemente der Zusatzheizung auf der Stirnfläche (4) des Heizkörpers (1) angeordnet und durch ein elektrisch leitendes Gitter (5) befestigt sind.

## Claims

1. A heater in a heating or air conditioning system for motor vehicles with integrated electrical additional heating, the heater (1) having a water tank (2) and a network (3) consisting of tubes and ribs with a front face (4), the additional heating having heating elements which are connected to the ribs in such a manner as to conduct heat and being connected via electrical conductors (11) to a plug box (7) positioned on the water tank (2) for supplying power to and heating the heating elements, and the plug box (7) being fixed to a separate cover (6) which can be connected mechanically to the water tank (2) and electrically to the conductors (11), it being possible to install the cover (6) and the heater (1) in a housing (14) of the heating or air conditioning system,
**characterised in that**
the cover (6) can be fixed to the water tank (2) of the heater (1) and to the housing (14).

2. A heater in accordance with claim 1,
**characterised in that**
the cover (6) can be fixed to the water tank (2) by a key and slot connection (2c, 18d).

3. A heater in accordance with claim 1 or 2,
**characterised in that**
the cover (6) can be fixed to the housing (14) and sealed by a key and slot connection (17, 18a).

4. A heater in accordance with claim 1, 2 or 3,
**characterised in that**
the cover (6) has two bearing faces (6a, 6b) positioned approximately perpendicular in relation to one another and in which is positioned a peripheral slot (18) consisting of slot sections (18a to 18f) for the key and slot connections, and keys (17, 2c) corresponding to the slot (18) are positioned on the water tank (2) and the housing (14).

5. A heater in accordance with claim 4,
**characterised in that**
the keys are designed as injection moulded ribs (17, 2c).

6. A heater in accordance with one of claims 1 to 5,
**characterised in that**
the cover (6) can be blocked by means of a clip connection (12) on the water tank (2).

7. A heater in accordance with claim 4,
**characterised in that**
projecting from the bearing surface (6b) of the cover (6) fixed to the housing (14) are clips (8) which can be clipped onto the electrical conductors (11).

8. A heater in accordance with claim 7,
**characterised in that**
the electrical conductors (11) are designed as L-shaped contact plates (11).

9. A heater in accordance with one of claims 1 to 8,
**characterised in that**
the heating elements of the additional heating are positioned on the front face (4) of the heater (1) and fixed by means of an electrically conductive grid (5).

## Revendications

1. Dispositif de chauffage d'une installation de chauffage ou de climatisation pour des véhicules à moteur avec chauffage électrique supplémentaire intégré, le dispositif de chauffage (1) présentant une boîte à eau (2), un réseau composé de tubes et de nervures (3) avec une surface frontale (4), le chauffage supplémentaire présentant des éléments chauffants qui sont en liaison thermoconductrice avec les nervures et étant relié via des conducteurs électriques (11) à une boîte de connecteurs (7) disposée sur la boîte à eau (2) pour l'alimentation en courant et le chauffage des éléments chauffants, et la boîte de connecteurs (7) étant fixée sur un couvercle séparé (6), lequel peut être relié de manière mécanique à la boîte à eau (2) et de manière électrique aux conducteurs (11), le couvercle (6) et le dispositif de chauffage (1) pouvant être montés dans un boîtier (14) de l'installation de chauffage ou de climatisation, **caractérisé en ce que** le couvercle (6) peut être fixé sur la boîte à eau (2) du dispositif de chauffage (1) et sur le boîtier (14).

2. Dispositif de chauffage selon la revendication 1, **caractérisé en ce que** le couvercle (6) peut être fixé à la boîte à eau (2) via un assemblage par rainure et languette (2c, 18d).

3. Dispositif de chauffage selon la revendication 1 ou 2, **caractérisé en ce que** le couvercle (6) peut être fixé au boîtier (14) et rendu étanche via un assemblage par rainure et languette (17, 18a).

4. Dispositif de chauffage selon la revendication 1, 2 ou 3, **caractérisé en ce que** le couvercle (6) présente deux surfaces de contact (6a, 6b) disposées presque perpendiculaires l'une par rapport à l'autre, dans lesquelles une rainure de pourtour (18) composée de sections de rainure (18a à 18f) est disposée pour les assemblages par rainure et languette, et **en ce que** des languettes (17, 2c) qui correspondent à la rainure (18) sont disposées sur la boîte à eau (2) et sur le boîtier (14).

5. Dispositif de chauffage selon la revendication 4, **caractérisé en ce que** les languettes sont conçues comme des nervures formées par injection (17, 2c).

6. Dispositif de chauffage selon une des revendications 1 à 5, **caractérisé en ce que** le couvercle (6) peut être arrêté sur la boîte à eau (2) au moyen d'une liaison à clips (12).

7. Dispositif de chauffage selon la revendication 4, **caractérisé en ce que** des clips (8) qui peuvent être clipsés avec les conducteurs électriques (11) dépassent de la surface de contact (6b) du couvercle (6) fixée sur le boîtier (14).

8. Dispositif de chauffage selon la revendication 7, **caractérisé en ce que** les conducteurs électriques sont conçus comme des tôles de contact (11) en forme de L.

9. Dispositif de chauffage selon l'une quelconque des revendications 1 à 8, **caractérisé en ce que** les éléments chauffants du chauffage supplémentaire sont disposés sur la face frontale (4) du dispositif de chauffage (1) et fixés par une grille conductrice d'électricité (5).
